(19) Europäisches Patentamt / European Patent Office / Office européen des brevets

(11) **EP 4 625 022 A1**

(12) **DEMANDE DE BREVET EUROPEEN**

(43) Date de publication:
**01.10.2025 Bulletin 2025/40**

(21) Numéro de dépôt: **25165783.9**

(22) Date de dépôt: **24.03.2025**

(51) Classification Internationale des Brevets (IPC):
**G02B 23/14** (2006.01)    **G02B 23/16** (2006.01)
**G02B 23/18** (2006.01)

(52) Classification Coopérative des Brevets (CPC):
**G02B 23/16; G02B 23/14; G02B 23/18**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **26.03.2024 FR 2403054**

(71) Demandeur: **Unistellar**
**13008 Marseille (FR)**

(72) Inventeurs:
• **BOROT, Antonin**
  **13008 MARSEILLE (FR)**

• **MALVACHE, Arnaud**
  **13008 MARSEILLE (FR)**
• **MARFISI, Laurent**
  **13008 MARSEILLE (FR)**
• **VANHOUTTE, Erik**
  **13008 MARSEILLE (FR)**
• **VERGNOL, Tom**
  **13008 MARSEILLE (FR)**
• **GERMOND, Malo**
  **13008 MARSEILLE (FR)**

(74) Mandataire: **Roman, Alexis**
**SPE Roman-André**
**35, rue Paradis**
**B.P. 30064**
**13484 Marseille Cedex 20 (FR)**

(54) **DISPOSITIF ET PROCÉDÉ D'ASSISTANCE À LA LOCALISATION D'OBJETS CÉLESTES**

(57) L'invention concerne un dispositif d'assistance à la localisation d'objets célestes, comprenant :
- une jumelle équipée d'une combinaison de capteurs mesurant des coordonnées horizontales d'une zone d'observation céleste, laquelle combinaison comprend : un magnétomètre, un accéléromètre et un gyroscope ;
- un module de géolocalisation pour déterminer des données de position, de date et d'heure de l'observation ;
- un module de traitement déterminant des coordonnées célestes équatoriales de la zone d'observation en utilisant les mesures de la combinaison de capteurs et les données du module de géolocalisation ;
- une interface pour sélectionner un objet céleste dans une base de données contenant des coordonnées célestes équatoriales d'objets célestes sélectionnables ;
- un module de comparaison calcuant une différence entre les coordonnées déterminées par le module de traitement et les coordonnées de l'objet sélectionné ;
- un module de guidage générant un signal de guidage fonction de la différence calculée.

[Fig. 1]

EP 4 625 022 A1

## Description

### Domaine technique

L'invention a pour objets un dispositif et un procédé d'assistance à la localisation d'objets célestes. L'invention a également pour objet un programme informatique permettant la mise en oeuvre du procédé.

L'invention se rapporte notamment au domaine des techniques d'aide à la localisation d'objets célestes, tels que des étoiles, des planètes, des comètes, des astéroïdes, des constellations, des galaxies, des satellites, etc.

### État de la technique

À ce jour, pour observer des objets célestes dans le ciel, de plus en plus d'amateurs utilisent des jumelles à longueur focale fixe, c'est-à-dire sans zoom (contrairement aux télescopes dédiés à l'astronomie). Les jumelles présentent l'avantage de pouvoir être plus facilement transportées et manipulées que des télescopes, mais le repérage d'objets célestes dans le ciel est toutefois plus complexe, notamment du fait de leur résolution limitée, de leur champ de vision restreint, de leur sensibilité accrue aux interférences lumineuses, et de leur manque de stabilité.

Il existe donc un besoin d'assister l'utilisateur dans la localisation d'objets célestes. Habituellement, la localisation précise d'objets célestes nécessite l'utilisation d'instruments d'observation sophistiqués comme des télescopes avec des systèmes de repérage électroniques, par exemple du type décrit dans le document brevet EP3494430A1.

Cependant, ces systèmes peuvent être coûteux, encombrants, nécessiter une charge de calcul relativement importante et sont en tout état de cause difficilement transposables dans une jumelle, sauf à faire des modifications complexes.

Le document brevet US2016124210 propose un dispositif d'assistance adaptable à une jumelle. Un support mécanique permet de maintenir un smartphone (téléphone intelligent) sur la jumelle. L'application informatique Skyview® installée dans le smartphone assiste l'utilisateur dans la localisation des objets célestes en utilisant les données de mesure d'un GPS intégré dans ledit smartphone. Toutefois, le smartphone étant relativement encombrant, on comprend que la manipulation de la jumelle équipée du smartphone devient malaisée. En outre, la localisation des objets célestes reste en pratique peu précise.

Un autre dispositif d'assistance à la localisation d'objets célestes connu de l'art antérieur est décrit dans le document brevet IT202100013925.

L'invention vise à remédier à tout ou partie des inconvénients précités. En particulier, un objectif de l'invention est de proposer un dispositif d'assistance à la localisation qui soit dédié à des jumelles, et dont la précision de localisation est améliorée par rapport aux solutions de l'art antérieur. Un autre objectif de l'invention est de proposer une technique d'assistance à la localisation qui soit simple, fiable, robuste et dont la charge de calcul est réduite.

### Présentation de l'invention

La solution proposée par l'invention est un dispositif d'assistance à la localisation d'objets célestes, comprenant :

- une jumelle comprenant un système optique et un moyen d'affichage, ladite jumelle étant équipée d'au moins une combinaison de capteurs configurée pour mesurer des coordonnées horizontales d'une zone d'observation céleste, laquelle combinaison de capteurs comprend : au moins un magnétomètre, un accéléromètre et un gyroscope ;
- un module de géolocalisation pour déterminer des données de position, de date et d'heure de l'observation ;
- un module de traitement pour déterminer des coordonnées célestes équatoriales de la zone d'observation céleste en utilisant les mesures de la combinaison de capteurs et les données du module de géolocalisation, ledit module de traitement étant configuré pour générer et/ou sélectionner des informations à afficher sur le moyen d'affichage ;
- une base de données contenant des coordonnées célestes équatoriales d'objets célestes sélectionnables ;
- une interface utilisateur pour sélectionner un objet céleste dans la base de données ;
- un module de comparaison pour calculer une différence entre les coordonnées célestes équatoriales déterminées par le module de traitement et les coordonnées célestes de l'objet céleste sélectionné ;
- un module de guidage pour générer un signal de guidage dont au moins une caractéristique est fonction de la différence calculée par le module de comparaison.

La présente invention offre un dispositif d'assistance à la localisation d'objets célestes facile à utiliser, économique, avec une précision accrue par rapport aux solutions de l'art antérieur et qui peut être aisément utilisé avec des jumelles classiques, par des observateurs/utilisateurs amateurs qui n'ont pas forcément de connaissances approfondies en astronomie ni d'équipement spécialisé.

D'autres caractéristiques avantageuses de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les autres caractéristiques définies ci-dessus. Les caractéristiques suivantes peuvent ainsi faire l'objet, le cas échéant, d'une ou plusieurs demandes de brevet divisionnaires :

Selon un mode de réalisation, la combinaison de capteurs comprend au moins deux magnétomètres et/ou la jumelle est équipée de plusieurs combinaisons de capteurs.

Selon un mode de réalisation, les mesures de la ou des combinaisons de capteurs utilisées pour déterminer les coordonnées célestes équatoriales de la zone d'observation céleste comprennent la moyenne ou la médiane des mesures des magnétomètres.

Selon un mode de réalisation, le module de traitement est configuré pour prendre la moyenne ou la médiane des mesures en temps réel de la combinaison de capteurs pour déterminer les coordonnées célestes équatoriales de la zone d'observation céleste.

Selon un mode de réalisation, le module de traitement est configuré pour : a) recevoir des mesures du magnétomètre ; b) accéder à un modèle magnétique mondial (MMM) représentant le champ magnétique terrestre ; c) appliquer des corrections aux mesures du magnétomètre sur la base des informations obtenues à partir du MMM pour calculer des mesures corrigées ; d) utiliser les mesures corrigées pour déterminer les coordonnées célestes équatoriales de la zone d'observation céleste.

Selon un mode de réalisation, le moyen d'affichage est installé de manière à afficher les informations dans un plan image du système optique de la jumelle.

Selon un autre mode de réalisation, le moyen d'affichage est un écran installé dans le plan image de manière à n'obstruer qu'en partie l'image de la zone d'observation céleste observée à travers un oculaire du système optique.

Selon un autre mode de réalisation, le moyen d'affichage est un écran semi-réfléchissant installé dans le plan image de manière à ce que les informations affichées se superposent à l'image de la zone d'observation céleste observée à travers un oculaire du système optique.

Selon un autre mode de réalisation, le moyen d'affichage se présente sous la forme d'un écran projetant une image numérique des informations en direction d'une lame semi-réfléchissante, laquelle lame est agencée dans le système optique de manière à ce que ladite image numérique se superpose à l'image de la zone d'observation céleste observée à travers un oculaire dudit système optique.

Selon un mode de réalisation, le module de guidage est configuré pour générer le signal de guidage si la différence calculée est inférieure ou égale à une première valeur seuil prédéterminée.

Selon un mode de réalisation, le module de guidage est configuré pour cesser la génération du signal de guidage lorsque la différence calculée par le module de comparaison demeure inférieure ou égale à une deuxième valeur seuil prédéterminée pendant une durée prédéterminée.

Selon un mode de réalisation, les capteurs sont logés dans un boîtier conçu pour être monté sur la jumelle.

Selon un mode de réalisation, le module de géolocalisation, le module de traitement, le module de comparaison et le module de guidage sont intégrés dans un téléphone intelligent ou une tablette.

Selon un autre mode de réalisation, les capteurs, le module de géolocalisation, le module de traitement, le module de comparaison et le module de guidage sont intégrés dans la jumelle.

Selon un autre mode de réalisation, les capteurs, le module de traitement, le module de comparaison et le module de guidage sont intégrés dans la jumelle, et le module de géolocalisation est intégré dans un téléphone intelligent ou une tablette.

Selon un mode de réalisation, le module de guidage est configuré pour générer un signal sonore et/ou un signal visuel et/ou un signal vibratoire dont au moins une caractéristique est amplifiée lorsque diminue la différence calculée par le module de comparaison.

Un autre aspect de l'invention concerne un procédé d'assistance à la localisation d'objets célestes, comprenant les étapes suivantes : a) équiper une jumelle comprenant un système optique et un moyen d'affichage, avec au moins une combinaison de capteurs configurée pour mesurer des coordonnées horizontales d'une zone d'observation céleste, laquelle combinaison de capteurs comprend : au moins un magnétomètre, un accéléromètre et un gyroscope ; b) déterminer des données de position, de date et d'heure de l'observation ; c) déterminer des coordonnées célestes équatoriales de la zone d'observation céleste en utilisant les mesures de la combinaison de capteurs et les données déterminées à l'étape ; d) sélectionner un objet céleste dans une base de données contenant des objets célestes sélectionnables associés à des coordonnées célestes équatoriales ; e) calculer une différence entre les coordonnées célestes équatoriales déterminées à l'étape c) et les coordonnées célestes de l'objet céleste sélectionné ; f) générer un signal de guidage dont au moins une caractéristique est fonction de la différence calculée à l'étape e). Le procédé comprend en outre une étape consistant à générer et/ou sélectionner des informations à afficher sur le moyen d'affichage.

Selon un mode de réalisation l'étape a) consiste à équiper la jumelle de plusieurs combinaisons de capteurs et/ou d'une combinaison de capteurs comprenant au moins deux magnétomètres ; et l'étape c) est réalisée en utilisant la moyenne ou la médiane des mesures des magnétomètres.

Selon un mode de réalisation, le procédé comprend en outre les étapes suivantes : sélectionner automatiquement dans la base de données, un plusieurs objets célestes dont les coordonnées célestes équatoriales correspondent à celles déterminées à l'étape c) ;

générer et/ou sélectionner des informations sur ledit ou lesdits objets célestes sélectionnés ; afficher lesdites informations sur un moyen d'affichage.

Selon un mode de réalisation, le procédé comprend en outre les étapes suivantes :c') déterminer des coordonnées géographiques d'une zone terrestre en utilisant les mesures de la combinaison de capteurs et les données déterminées à l'étape b) ; d') sélectionner un point de repère terrestre dans une base de données contenant des points de repère terrestres sélectionnables associés à des coordonnées géographiques ; e') calculer une différence entre les coordonnées géographiques déterminées à l'étape c') et les coordonnées géographiques du point de repère terrestre sélectionné ; f') générer un signal de guidage dont au moins une caractéristique est fonction de la différence calculée à l'étape e').

Selon un mode de réalisation, le procédé comprend en outre étapes de calibration suivantes : - sélectionner un objet céleste dans une base de données contenant des objets célestes associés à des coordonnées célestes équatoriales, ledit objet sélectionné présentant des coordonnées célestes équatoriales correspondant aux coordonnées célestes équatoriales de la zone d'observation céleste déterminée à l'étape c) ; - afficher, sur le moyen d'affichage, une image numérique représentant l'objet céleste sélectionné, de manière à ce que ladite image numérique soit perçue à travers un oculaire de ladite jumelle ;- fixer l'image numérique de manière à ce que ladite image s'affiche de manière statique sur le moyen d'affichage ; - ajuster manuellement la jumelle pour aligner l'image réelle de l'objet céleste (perçue à travers l'oculaire de ladite jumelle et l'image numérique ;- finaliser la calibration dès que les deux images sont superposées et/ou coïncident.

Encore un autre aspect de l'invention concerne un programme informatique comprenant des instructions de code pour l'exécution des étapes b), c), e) et f) du procédé précité, lorsque lesdites instructions sont exécutées par un module de traitement.

## Brève description des figures

D'autres avantages et caractéristiques de l'invention apparaîtront mieux à la lecture de la description des modes de réalisation qui vont suivre, en référence aux dessins annexés, réalisés à titre d'exemples indicatifs et non limitatifs et sur lesquels :

[Fig. 1] est une vue d'ensemble d'un dispositif conforme à l'invention.

[Fig. 2A] et [Fig. 2B] illustrent des interfaces utilisateur permettant de sélectionner un objet céleste dans une base de données.

[Fig. 3] est un diagramme illustrant l'interaction de différents éléments d'un dispositif selon l'invention et présentant différentes étapes d'un procédé selon l'invention.

[Fig. 4A] et [Fig. 4B] schématisent des exemples de réalisation d'un boîtier intégrant un ensemble de capteurs.

[Fig. 5] est un schéma simplifié d'un système optique d'une jumelle dans lequel est intégré un moyen d'affichage selon un mode de réalisation.

[Fig. 6] est un schéma simplifié d'un système optique d'une jumelle dans lequel est intégré un moyen d'affichage selon un autre mode de réalisation.

[Fig. 7] illustre des étapes d'un procédé selon l'invention pour la localisation de points de repère terrestres.

[Fig. 8] illustre la mise en œuvre du processus de calibration lors de l'observation d'objets célestes (calibration nocturne).

[Fig. 9] illustre la mise en œuvre du processus de calibration lors de l'observation d'objets terrestres (calibration diurne).

## Description des modes de réalisation

L'invention peut mettre en oeuvre un ou plusieurs programmes informatiques exécutés par des équipements. Par souci de clarté, il faut comprendre au sens de l'invention que « *un équipement fait quelque* chose » ou que « *le programme informatique fait quelque chose* », signifient « *le programme informatique exécuté par un module de traitement de l'équipement fait quelque* chose ».

Le cas échéant et pour éventuellement compléter leur définition courante, les précisions suivantes sont apportées à certains termes utilisés dans les revendications et la description :

- « Jumelle » peut être comprise de façon non limitative comme une simple jumelle ou une paire de jumelles.

- « Système optique » peut être compris comme l'ensemble organisé et intégré dans la jumelle de composants optiques, tels que lentilles optiques et prismes, conçu pour capter, diriger et modifier les rayons lumineux provenant d'une zone d'observation afin d'agrandir l'image perçue par l'observateur.

- « Ressource informatique » peut être compris de façon non limitative comme : composant, matériel, logiciel, fichier, connexion à un réseau informatique, quantité de mémoire RAM, espace de disque dur, bande passante, vitesse de processeur, nombre de CPU, etc.

- « Module de traitement » peut être compris de façon non limitative comme : processeur, microprocesseurs, CPU (pour Central Processing Unit).

- « Programme informatique » peut être comprise comme : logiciel, application informatique, ou software, dont les instructions de code sont notamment exécutées par un module de traitement.

- Tel qu'utilisé ici, sauf indication contraire, l'éventuelle utilisation des adjectifs ordinaux « premier », « deuxième », etc., pour décrire un objet ou une étape indique simplement que différentes occurrences d'objets ou d'étapes similaires sont mentionnées et n'implique pas que les objets ou étapes ainsi décrits doivent être dans une séquence donnée, que ce soit dans le temps, dans l'espace, dans un classement ou de toute autre manière.

- « X et/ou Y » signifie : X seul ou Y seul ou X+Y.

- D'une manière générale, on appréciera que sur les différents dessins annexés, les objets sont arbitrairement dessinés pour faciliter leur lecture.

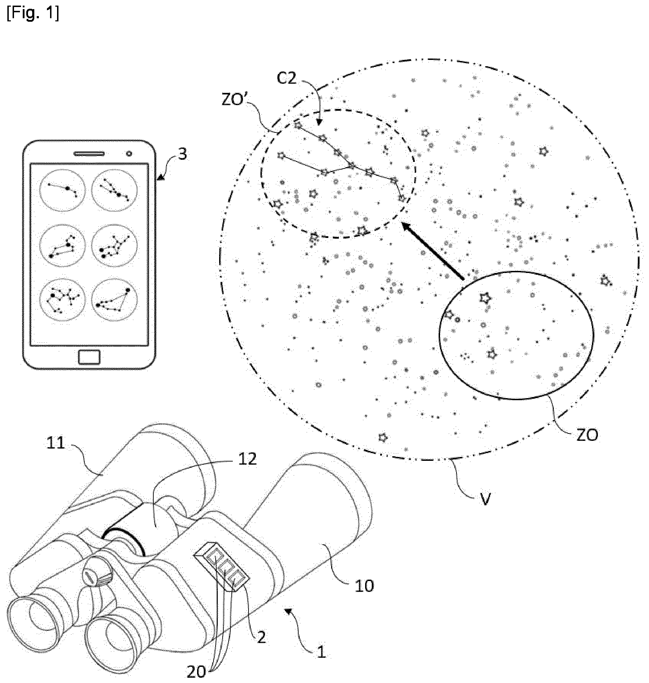

Sur l'exemple de la figure 1, la jumelle 1 est une jumelle classique du commerce présentant deux tubes optiques 10, 11 parallèles, chacun étant équipé d'un oculaire et d'une ou plusieurs lentilles optiques et/ou prismes formant le système optique. Les deux tubes 10, 11 sont reliés par un pont central doté d'un mécanisme de mise au point 12, permettant d'ajuster la netteté de l'image. La jumelle 1 peut également inclure des moyens pour régler la distance interpupillaire afin de s'adapter à la morphologie de chaque utilisateur.

Les jumelles sont typiquement classées par leur puissance de grossissement et le diamètre de leurs objectifs. Par exemple, dans une paire de jumelles "8x42", le "8" indique un facteur zoom (ou grossissement ; proportionnel à la longueur focale) de 8 fois et le "42" indique un diamètre de lentille objective de 42 mm.

Selon un mode de réalisation, la valeur du facteur zoom de la jumelle 1 est comprise entre 2 et 20, préférentiellement supérieur à 8 pour l'observation d'objets célestes. Ce zoom est préférentiellement fixe, mais peut être variable.

La jumelle 1 est équipée d'une ou plusieurs combinaisons de capteurs 20 configurées pour mesurer des coordonnées horizontales d'une zone ZO observée au travers de ladite jumelle.

Sur la figure 1, la zone d'observation ZO correspond à une zone de la voûte céleste V. À titre d'exemple, les coordonnées horizontales de la zone d'observation ZO correspondent à celles du centre de ladite zone ± 10%.

Le système de coordonnées horizontales permet de localiser des objets célestes dans le ciel. Ce système utilise des mesures d'azimut et d'altitude. L'azimut est la direction d'un objet céleste le long de l'horizon, mesuré en degrés le long de l'horizon à partir du nord vers l'est. L'altitude est la hauteur de l'objet céleste au-dessus de l'horizon, mesurée en degrés. Un objet qui est directement au-dessus de l'observateur à une altitude de 90 degrés.

Selon un mode de réalisation, la combinaison de capteurs 20 comprend au moins un magnétomètre pour la mesure de l'azimut, un accéléromètre pour la mesure de l'altitude et un gyroscope pour la mesure de la vitesse de rotation. Cette combinaison de capteurs permet de mesurer avec précision les coordonnées horizontales.

La mesure de l'azimut par le magnétomètre peut être perturbée par des masses métalliques environnantes. Aussi, la combinaison du magnétomètre et du gyroscope permet de mesurer précisément et de manière plus fiable l'azimut, notamment lorsque le mouvement de la jumelle, mesuré au gyroscope, n'est pas cohérent avec la mesure du champ magnétique par le magnétomètre.

Pour améliorer davantage la fiabilité des mesures du magnétomètre, la combinaison de capteurs 20 comprend avantageusement au moins deux magnétomètres et/ou plusieurs combinaisons de capteurs sont utilisées comme expliquées plus avant dans la description.

Les coordonnées célestes varient en fonction de la position de l'observateur sur la Terre, de la date et de l'heure. Par conséquent, le dispositif comprend un module de géolocalisation 4 déterminant la position, la date et l'heure de l'observation.

Ce module de géolocalisation 4 est préférentiellement un module de géolocalisation par satellite GPS permettant d'obtenir une mesure précise et fiable de la position, de la date et de l'heure d'observation. D'autres types de modules de géolocalisation par satellite type GLONASS, BEIDOU ou GALILEO peuvent toutefois être utilisés. Bien que moins précis, on peut également utiliser un module apte à estimer la position géographique de l'observateur, la date et l'heure à partir de données provenant d'antennes de réseaux de téléphonie mobile et/ou de points d'accès Wifi®.

Selon un mode de réalisation, le module de géolocalisation 4 est un module GPS intégré de manière classique dans un terminal 3 de l'observateur/utilisateur, notamment un smartphone (téléphone intelligent), une tablette ou un ordinateur portable. Selon un autre mode de réalisation, le module de géolocalisation 4 est intégré dans un boîtier 2 dans lequel sont également installés les capteurs 20.

Le dispositif comprend également un module de traitement 5 configuré pour déterminer des coordonnées célestes équatoriales de la zone d'observation ZO en utilisant les mesures de la ou des combinaisons de capteurs 20 et les données du module de géolocalisation 4. Selon un mode de réalisation, le module de traitement 5 est intégré dans le boîtier 2. Il peut également s'agir d'un module de traitement intégré de manière classique et native dans le terminal 3.

Lorsque le dispositif comprend plusieurs magnétomètres (soit que la combinaison de capteurs 20 comprend deux ou plusieurs magnétomètres, soit que plusieurs combinaisons magnétomètre/accéléromètre/gyroscope sont utilisées), alors la moyenne ou la médiane des mesures desdits magnétomètres est avantageusement calculée par le module de traitement 5 pour améliorer la précision des mesures, tout en sollicitant peu de ressources computationnelles de la part dudit module de traitement. Les mesures des magnétomètres peuvent en effet être affectées par des erreurs ou incertitudes systématiques ou aléatoires telles que leur résolution, leur précision, leur stabilité temporelle (notamment au regard des changements de température ou d'autres facteurs environnementaux parasites), le bruit, leur linéarité sur leur plage de mesure, etc. Le moyennage des mesures permet de réduire l'effet de ces erreurs/incertitudes en les compensant mutuellement. La médiane peut toutefois être moins sensible aux valeurs extrêmes mesurées.

Les mesures d'azimut sont déduites des mesures de l'intensité du champ magnétique mesurées par le(s) magnétomètres(s) dans deux directions horizontales. Ces mesures peuvent également être affectées par la non-uniformité du champ magnétique terrestre, due par exemple à des spécificités locales (ex : structures géologiques) ou à des variations temporelles (ex : changements dus aux mouvements du fer liquide dans le noyau terrestre). Aussi, selon un mode de réalisation, le module de traitement 5 accède avantageusement à un modèle magnétique mondial MMM (ou WMM pour l'acronyme anglais de World Magnetic Model) représentant le champ magnétique terrestre. Le MMM est un modèle standard utilisé pour représenter le champ magnétique terrestre. Il est mis à jour régulièrement pour tenir compte des changements lents, mais constants du champ magnétique terrestre. Ce modèle fournit des estimations du champ magnétique et de ses composantes pour différentes régions de la Terre, à différentes altitudes et différentes périodes temporaires. Le module de traitement 5 peut ainsi appliquer des corrections aux mesures des magnétomètres sur la base des informations obtenues à partir du MMM pour calculer des meures corrigées en tenant compte des variations locales et temporaires du champ magnétique terrestre, telles que prévues par le MMM. Ces mesures corrigées sont alors utilisées pour la détermination des coordonnées célestes équatoriales de la zone d'observation ZO. Les données du modèle MMM peuvent par exemple être téléchargées et stockées dans une zone mémoire du terminal 3 accessible au module de traitement 5 ou être accessibles depuis un serveur informatique distant auquel est connecté ledit terminal 3.

Selon un mode de réalisation, le module de traitement 5 calcule la moyenne ou la médiane des coordonnées horizontales mesurées par l'ensemble des capteurs 20.

Le nombre de magnétomètres et/ou de combinaisons de capteurs (dans le cas où chaque combinaison comprenant un seul magnétomètre) est compris entre 1 et 10, ce nombre étant avantageusement déterminé par la formule suivante :

$$N = c * (p * Z)^2$$

Où : « N » est le nombre de magnétomètres et/ou de combinaisons de capteurs, N étant un entier supérieur ou égal à 1, préférentiellement compris entre 2 et 10, « c » est une constante, « p » est la précision du ou des magnétomètres utilisés et « Z » est le facteur zoom de la jumelle 1.

Cette méthode de détermination permet d'avoir un excellent compromis entre précision des mesures et nombre de capteurs (et donc du coût). On peut en outre sélectionner très rapidement et très facilement un nombre approprié de magnétomètres et/ou de combinaisons de capteurs 20 en fonction du niveau de précision souhaité et des spécifications de la jumelle 1, notamment son facteur zoom.

Le système de coordonnées célestes équatoriales utilise les mesures d'ascension droite et de déclinaison. L'ascension droite est mesurée en heures, minutes et secondes à partir du point vernal. La déclinaison est mesurée en degrés, minutes et secondes nord ou sud de l'équateur céleste.

La conversion des coordonnées célestes horizontales (azimut et altitude) en coordonnées célestes équatoriales (ascension droite et déclinaison) nécessite la connaissance de l'emplacement précis de l'observateur sur la Terre et de la date et de l'heure précise de l'observation. Les données fournies par le module de géolocalisation 4 sont donc également utilisées par le module de traitement 5.

Selon un mode de réalisation, la conversion est réalisée par le module de traitement 5 en exécutant les instructions de code d'un programme informatique dédié tel que SkyCoord® (classe de la bibliothèque Astropy®), NOVAS® (Naval Observatory Vector Astrometry Software), Coordinate Converter®.

Avantageusement, le module de traitement 5 prend la moyenne ou la médiane des mesures en temps réel de la ou des combinaisons de capteurs 20 pour déterminer les coordonnées célestes équatoriales de la zone d'observation ZO. Par « temps réel », on entend au sens de l'invention une fréquence de calcul comprise entre une fois et cinq fois la fréquence d'acquisition des capteurs 20. On a ainsi des coordonnées célestes équatoriales en temps réel de la zone d'observation ZO, rendant le repérage très précis et dynamique.

Le dispositif comprend en outre une base de données d'objets célestes auxquels sont associées des coordonnées célestes équatoriales. Ces coordonnées célestes équatoriales peuvent être fixes ou dynamiques pour prendre en compte les paramètres temporels pour des objets en mouvement (ex : comètes, satellites, ...). Selon un mode préféré de réalisation, cette base de données est intégrée dans une zone mémoire du terminal 3. La base de données peut également être installée dans un serveur informatique distant auquel est connecté le terminal 3. En tout état de cause, la base de données est accessible depuis le terminal 3, en lançant une application informatique dédiée préalablement téléchargée dans ledit terminal ou accessible depuis un site internet. Cette base de données peut être régulièrement mise à jour.

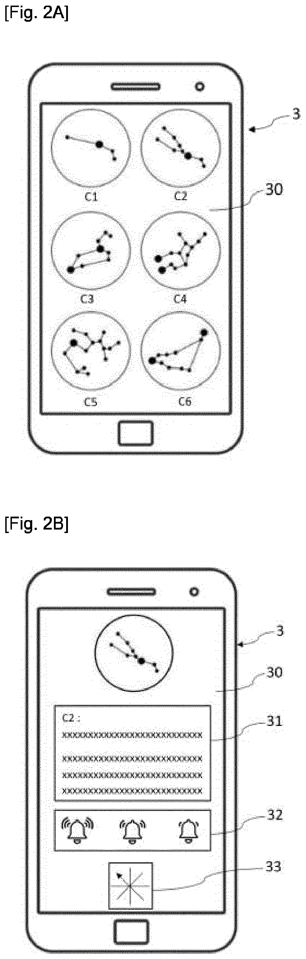

Une interface utilisateur permet de sélectionner un objet céleste dans cette base de données. Sur les figures 2A et 2B, l'interface utilisateur correspond à un écran tactile 30 du terminal 3. L'observateur/utilisateur peut par exemple rechercher un objet céleste spécifique ou naviguer dans une liste d'objets célestes C1-C6, et faire une sélection en touchant l'objet correspondant sur l'écran tactile. Sur l'exemple de la figure 2A, est affichée une liste de constellations référencées C1 à C6 apparaissant sous forme de pictogrammes sélectionnables.

En sélectionnant une de ces constellations, par exemple la constellation du taureau C2, l'observateur/utilisateur a avantageusement accès à des informations relatives à cet objet céleste (par exemple son histoire et/ou ses caractéristiques). Sur la figure 2B, ces informations sont affichées dans un cadre ou une fenêtre 31 de l'écran 30.

Le dispositif comprend encore un module de comparaison 6 configuré pour comparer les coordonnées célestes équatoriales de la zone d'observation ZO déterminées par le module de traitement avec les coordonnées célestes associées à l'objet céleste sélectionné C2. Le module de comparaison peut alors calculer la différence entre lesdites coordonnées. La comparaison peut notamment impliquer la soustraction des coordonnées pour obtenir cette différence.

Selon un mode de réalisation, le module de comparaison 6 se présente sous la forme d'un calculateur ou d'un programme informatique exécuté par le module de traitement. Le module de comparaison 6 est avantageusement intégré dans le terminal 3, mais peut être intégré dans le boîtier 2.

Le dispositif comprend encore un module de guidage 7 générant un signal de guidage dont au moins une caractéristique est fonction de la différence calculée par le module de comparaison 6.

Le module de guidage 7 est intégré dans le terminal 3, dans la jumelle 1 ou dans le boîtier 2. Selon un mode de réalisation, le module de guidage 7 est commandé par le module de traitement 5. Le module de guidage 7 peut par exemple consister en un programme informatique exécuté par le module de traitement 5. Le signal de guidage généré est préférentiellement un signal sonore (ex : Bips sonores, sirène, mélodie) et/ou un signal visuel (ex : écran clignotant ou LED clignotante, icône animée, changement de couleur) et/ou un signal vibratoire (ex : le terminal 3 ou le boîtier 2 vibre).

Un signal de guidage multimodal combinant plusieurs modes de signalisation et exploitant différentes modalités sensorielles (vision, audition, toucher) permet de maximiser la probabilité qu'un observateur/utilisateur détecte, reconnaisse et réponde audit signal, quels que soient les conditions et l'environnement d'observation.

La ou les caractéristiques variables du signal de guidage peuvent notamment être sa fréquence et/ou son amplitude et/ou son intensité et/ou sa tonalité et/ou son rythme. Par exemple, plus la différence calculée par le module de comparaison 6 est grande, plus le signal de guidage sonore sera grave. Inversement, plus la différence calculée est proche de zéro, plus le signal de guidage sonore sera aigu. Selon un autre exemple, la vibration du signal de guidage vibratoire s'intensifie lorsque la différence calculée par le module de comparaison 6 diminue. De manière plus générale, au moins une caractéristique du signal de guidage est amplifiée lorsque diminue la différence calculée par le module de comparaison 6. Lorsque la différence calculée est nulle ou quasi-nulle ou, de manière plus générale inférieure ou égale à une valeur seuil prédéterminée (ci-après désignée par « valeur seuil de localisation réussie »), le signal de guidage est alors optimal.

Sur la figure 2B, le signal de guidage apparaît dans un cadre ou une fenêtre 32 de l'écran 30. Un autre cadre ou fenêtre 33 peut afficher une direction vers laquelle déplacer la jumelle 1 pour atteindre la zone où se trouve l'objet céleste C2. Cette indication peut également être vocale. L'ensemble de ces informations constituent le signal de guidage.

L'observateur/utilisateur doit ainsi déplacer la jumelle 1 jusqu'à ce que la différence calculée par le module de comparaison 6 atteigne la valeur seuil de localisation réussie et que le signal de guidage optimal indique la localisation précise de la zone où se trouve l'objet céleste C2. L'invention permet donc de fournir une indication claire de la détection réussie de la zone de l'objet céleste C2, ce qui accroît la rapidité, l'efficacité et la précision du processus d'observation. L'observation d'objets célestes devient ainsi accessible à un grand nombre de personnes, notamment à des observateurs/utilisateurs qui n'ont pas de connaissances ou d'expériences approfondies en astronomie.

Selon un mode de réalisation, le module de guidage 7 est configuré pour générer le signal de guidage uniquement si la différence calculée par le module de comparaison est inférieure ou égale à une valeur seuil prédéterminée (ci-après désignée par « valeur seuil de déclenchement de guidage »). La valeur seuil de déclenchement de guidage est supérieure à la valeur seuil de localisation réussie. Le signal de guidage n'est ainsi généré que si la zone observée ZO n'est trop éloignée de l'objet d'intérêt C2. L'observateur/utilisateur n'est ainsi averti que si l'objet d'intérêt C2 est dans le champ de vision de la jumelle 1 ou à proximité de celui-ci, ce qui rend le processus de recherche plus ludique.

Ainsi, en reprenant l'exemple de la figure 1, l'observateur/utilisateur recherche la constellation du taureau C2. Il pointe initialement la jumelle vers une zone d'observation ZO ne contenant pas cette constellation. La zone initiale d'observation ZO étant toutefois relativement proche de la constellation recherchée, le signal de guidage est généré. L'interface utilisateur peut indiquer dans quelle direction déplacer la jumelle 1 (indication 33 sur la figure 2B). Lorsque la zone d'observation contient la constellation (référencée ZO'), le signal de guidage devient optimal. L'observateur/utilisateur peut maintenant repérer la constellation C2 au travers de sa jumelle 1.

Dans des situations pratiques, une fois que l'observateur/utilisateur a localisé avec succès l'objet céleste C2, la persistance du signal de guidage peut s'avérer gênante non seulement pour lui-même, mais encore pour d'autres observateurs situés à proximité. Pour pallier ce désagrément, le module de guidage 7 est avantageusement configuré pour interrompre la génération du signal de guidage lorsque la différence calculée par le module de comparaison demeure inférieure ou égale à une valeur seuil prédéterminée, pendant une durée prédéterminée, par exemple comprise entre 5 secondes et 30 secondes. Ce contrôle intelligent du module de guidage 7 permet non seulement d'améliorer l'expérience de l'observateur/utilisateur, mais aussi de minimiser les perturbations pour d'autres observateurs présents dans son environnement immédiat.

De manière alternative ou complémentaire, le dispositif peut comprendre un bouton actionnable manuellement par l'observateur/utilisateur pour interrompre la génération du signal de guidage. Ce bouton peut par exemple être intégré dans la jumelle 1 ou sur le boîtier 2, ou être accessible depuis le terminal 3.

Dans certains cas, même lorsque l'observateur/utilisateur observe la zone d'intérêt ZO', la localisation précise de l'objet d'intérêt C2 peut s'avérer complexe pour un amateur. Il est ainsi avantageux d'équiper la jumelle 1 d'un moyen pour afficher des informations concernant l'objet d'intérêt C2. Ces informations, considérées comme des signaux de guidage précités, sont générées et/ou sélectionnées par le module de traitement 5 et peuvent par exemple se présenter sous la forme d'une ou plusieurs flèches, symboles ou éléments de signalisation indiquant la localisation de l'objet céleste C2 et/ou une figure géométrique schématisant ledit objet. Le module de traitement 5 peut commander l'affichage de ces informations en réponse à la sélection de l'objet céleste C2 ou en réponse à la génération du signal de guidage et/ou dès que la jumelle 1 est orientée vers la zone d'intérêt ZO'.

Selon un mode de réalisation, ce moyen d'affichage est un écran situé à l'extérieur de la jumelle 1, pouvant par exemple consister en l'écran 30 du terminal 3. Une image de la zone d'intérêt ZO', telle que visualisable depuis les oculaires de la jumelle 1, et dans laquelle les informations précitées mettent en évidence l'objet d'intérêt C2, est alors affichée sur cet écran. En consultant cet affichage, l'observateur/utilisateur peut localiser plus facilement l'objet d'intérêt C2. Cette solution nécessite toutefois de détourner son regard des oculaires pour visualiser l'écran 30.

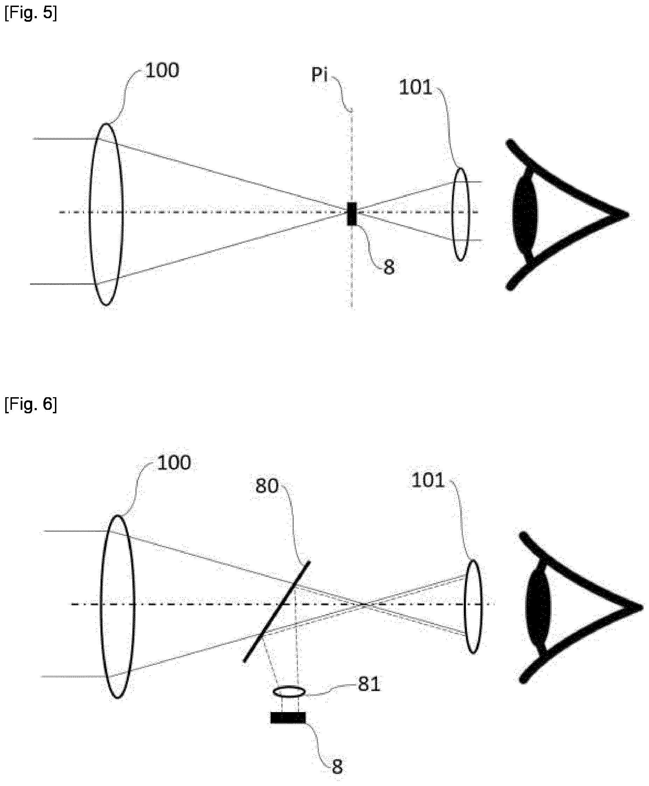

Selon une variante de réalisation illustrée sur la figure 5 et permettant d'améliorer l'expérience utilisateur, le moyen d'affichage 8 est intégré dans la jumelle 1, et plus particulièrement installé de manière à afficher les informations dans un plan image Pi du système optique. Le plan image Pi est localisé à l'endroit où l'image virtuelle de la zone observée est formée par l'objectif 100 (lentille frontale) est projetée et avant qu'elle soit agrandie par l'oculaire 101. Les informations affichées dans le plan image Pi permettent ainsi à l'observateur/utilisateur de les consulter en maintenant ses yeux au niveau des oculaires, sans détourner son regard.

Selon un mode de réalisation, ce moyen d'affichage 8 se présente sous la forme d'un écran, par exemple un écran OLED ou LCD, installé dans le plan image Pi de manière à n'obstruer qu'en partie l'image observée à travers l'oculaire 101.

Selon un autre mode de réalisation, ce moyen d'affichage 8 se présente sous la forme d'un écran semi-réfléchissant, par exemple un film à cristaux liquides ou un écran OLED ou LCD transparent, installé dans le plan image Pi de manière à ce que les informations affichées se superposent à l'image réelle observée à travers l'oculaire 101. Cette solution permet notamment d'afficher l'image de l'objet d'intérêt C2 à la même échelle que l'image réel des objets célestes présents dans la zone d'observation ZO, ZO'. L'observateur/utilisateur n'a ainsi qu'à superposer les deux images pour identifier l'objet d'intérêt C2.

Selon une autre variante de réalisation illustrée sur la figure 6, le moyen d'affichage 8 se présente sous la forme d'un écran, par exemple un écran OLED ou LCD, projetant une image numérique des informations, en direction d'une lame semi-réfléchissante 80. Cette lame 80 est agencée dans le système optique de manière à transmettre vers l'oculaire 101 : un premier sous-ensemble de rayons lumineux provenant de la zone observée (image naturelle) ; et un deuxième sous-ensemble de rayons lumineux projetés par l'écran 8 (image numérique). Ces rayons se combinent alors au niveau de l'oculaire 101 pour restituer l'image naturelle de la zone observée combinée à l'image numérique des informations. Une lentille 81 est avantageusement prévue entre l'écran 8 et la lame semi-réfléchissante 80 pour orienter et/ou faire converger les rayons lumineux projetés vers ladite lame.

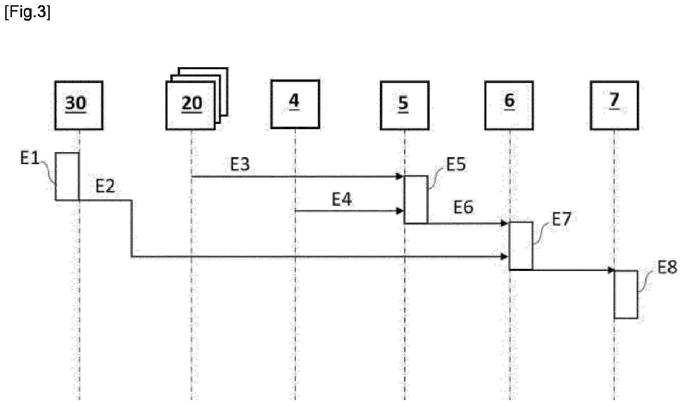

La figure 3 illustre un exemple d'interaction de différents éléments précités du dispositif et présente différentes étapes du procédé d'assistance à la localisation d'objets célestes :

- Étape E1 : depuis l'interface 30, l'observateur/utilisateur sélectionne un objet céleste dans la base de données.

- Étape E2 : les coordonnées célestes équatoriales de l'objet céleste sélectionné sont transmises au module de comparaison 6. Si le module de comparaison est intégré dans le boîtier 2, cette transmission peut être réalisée via une ligne de communication de courte portée, par exemple du type Bluetooth® ou Wifi®, établie entre ledit boîtier et le terminal 3. Le boîtier 2 intègre dans ce cas les ressources informatiques permettant d'assurer cette communication.

- Étape E3 : les coordonnées horizontales mesurées par les capteurs 20 sont transmises au module de traitement 5. Si le module de traitement 5 est intégré dans le terminal 3, cette transmission peut être réalisée via une ligne de communication de courte portée, par exemple du type Bluetooth® ou Wifi®, établie entre le boîtier 2 et ledit terminal. Le boîtier 2 intègre dans ce cas les ressources informatiques permettant d'assurer cette communication.

- Étape E4 : les données de position, de date et d'heure déterminées par le module de géolocalisation 4 sont transmises au module de traitement 5. Si le module de géolocalisation 4 et le module de traitement 5 ne sont pas installés dans le même équipement (boîtier 2 ou terminal 3), cette transmission peut être réalisée via une ligne de communication de courte portée, comme décrit précédemment.

- Étape E5 : le module de traitement 5 détermine les coordonnées célestes équatoriales de la zone d'observation céleste ZO en utilisant les mesures des capteurs 20 et les données du module de géolocalisation 4.

- Étape E6 : les coordonnées célestes équatoriales déterminées par le module de traitement 5 sont transmises au module de comparaison 6. Si le module de traitement 5 et le module de comparaison 6 ne sont pas installés dans le même équipement (boîtier 2 ou terminal 3), cette transmission peut être réalisée via une ligne de communication de courte portée, comme décrite précédemment.

- Étape E7 : le module de comparaison 6 effectue la comparaison des coordonnées célestes équatoriales transmises par le module de traitement 5 avec les coordonnées célestes transmises à l'étape E2.

- Étape E8 : le module de guidage 7 génère le signal de guidage en fonction du résultat de la comparaison de l'étape E7.

Selon un mode de réalisation, le module de géolocalisation 4, le module de traitement 5, le module de comparaison 6 et le module de guidage 7 sont intégrés dans le terminal 3. Le dispositif bénéficie ainsi des ressources informatiques qui sont habituellement nativement présentes dans un terminal 3 de type smartphone ou tablette, de sorte que l'encombrement, la conception et les coûts du boîtier 2 sont limités. La technologie offerte par l'invention est ainsi accessible à un plus grand nombre d'utilisateurs. Les capteurs 20 peuvent également être installés dans le terminal 3. Dans ce cas, le terminal 3 est préférentiellement fixé sur jumelle 1 de manière à ce que les coordonnées horizontales de la zone ZO observée au travers de ladite jumelle soient fiables et précises.

Selon une variante de réalisation, la jumelle 1 est équipée d'une partie des modules, l'autre partie des modules étant intégrée dans le terminal 3.

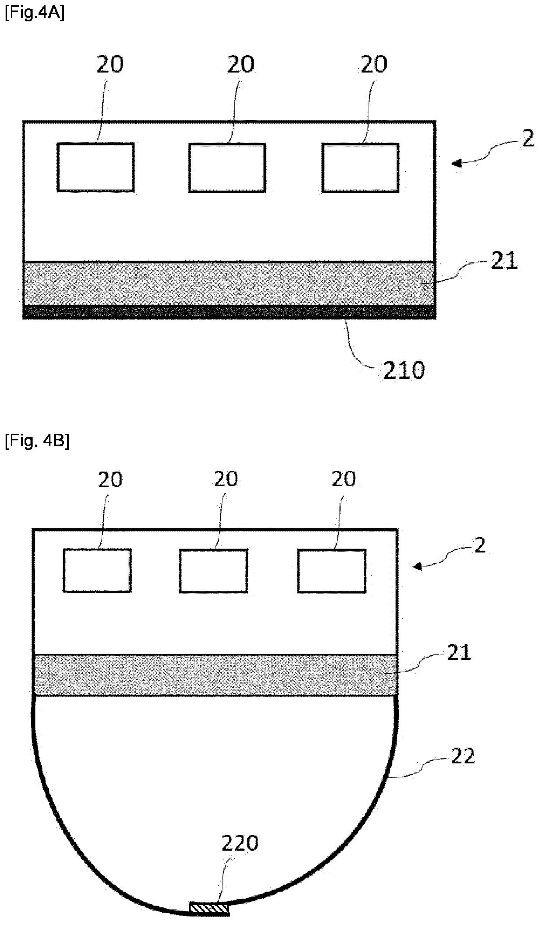

Sur les figures 4A et 4B, les capteurs 20 sont logés dans un boîtier 2 conçu pour être monté sur la jumelle 1. Le boîtier 2 présente par exemple une longueur comprise entre 10 mm et 60 mm, une largeur comprise entre 5 mm et 20 mm et une hauteur comprise entre 2 mm et 5 mm. Ces dimensions permettent de garantir un bon compromis entre une compacité ne gênant pas l'observateur/utilisateur et une intégration harmonieuse.

Le boîtier 2 est avantageusement étanche pour assurer une protection contre les intempéries et rigide pour résister aux chocs potentiels. Il peut être réalisé en plastique, acier, aluminium, composite, ou autre matériau similaire et être obtenu par moulage, usinage, assemblage, etc.

À l'intérieur du boîtier 2, chaque capteur 20 peut être installé dans un aménagement individuel ou fixé sur un support commun, notamment sur une carte électronique commune.

Le boîtier 2 est préférentiellement adapté pour être fixé de manière stable sur la jumelle 1, évitant ainsi tout mouvement indésirable dudit boîtier pendant l'observation, tout en étant aisément adaptable à différents modèles de jumelles.

Une face externe du boîtier 2 est préférentiellement pourvue d'un tampon 21. Ce tampon peut être collé ou vissé sur la face externe du boîtier 2. Il est constitué d'un matériau souple et/ou flexible, par exemple en élastomère type caoutchouc, lui permettant de se conformer à diverses formes et/ou finitions de la jumelle pour assurer une fixation optimale.

Dans le mode de réalisation de la figure 4A, le tampon 21 est conçu pour être fixé de manière détachable sur la jumelle 1. La face du tampon 21 destinée à être fixée sur la jumelle 1 peut notamment être pourvue d'un revêtement adhésif 210 lui permettant d'être retiré sans laisser de résidus, par exemple d'une colle à base de silicone, d'un adhésif thermofusible ou d'un adhésif double face, avec bande de protection pelable. Selon une variante de réalisation, le tampon 21 est conçu pour être fixé de manière permanente sur la jumelle 1, par exemple au moyen d'une colle type cyanoacrylate ou époxy.

Dans le mode de réalisation de la figure 4B, le boîtier 2 est équipé d'une attache ou sangle 22 pourvue d'un moyen d'attache réglable 220, par exemple du type Velcro®, permettant un ajustement rapide. La sangle 22 permet une fixation modulable et un détachement aisé.

L'attache ou la sangle 22 est préférentiellement élastique pour permettre une fixation adaptable à différents modèles de jumelles. La sangle élastique 22, une fois étirée autour de la jumelle 1, assure une fixation stable du boîtier 2. Un avantage de cette solution est sa capacité à s'adapter à différentes tailles et formes de jumelles.

Dans ce mode de réalisation avec sangle 22, le tampon 21 n'est pas nécessaire bien qu'il permette d'améliorer la stabilité et l'adaptabilité.

D'autres modes de fixation détachables sont également envisageables. Par exemple, un système de clips ou de rail peut être intégré sur le boîtier 2, lui permettant d'être clipsé ou monté sur un support complémentaire de la jumelle 1. Si la jumelle 1 présente des composants métalliques ou un support magnétique dédié, le boîtier 2 peut intégrer des aimants. Le boîtier 2 peut encore comprendre des mini-ventouses. Des inserts filetés peuvent encore être ajoutés à la jumelle 1, le boîtier étant alors directement vissé sur lesdits inserts.

Selon un autre mode de réalisation, les capteurs 20 sont intégrés dans la structure de la jumelle 1, par exemple dès la conception de celle-ci.

Selon un mode de réalisation, le module de géolocalisation 4, le module de traitement 5, le module de comparaison 6 et le module de guidage 7 sont également intégrés dans le boîtier 2.

Selon encore un autre aspect, l'invention concerne un produit programme d'ordinateur comprenant des instructions de code pour l'exécution d'au moins les étapes pour : déterminer la position, la date et l'heure de l'observation ; transformer les coordonnées horizontales en coordonnées célestes équatoriales ; comparer les coordonnées célestes équatoriales ainsi calculées avec les coordonnées célestes associées à l'objet céleste sélectionné ; calculer la différence entre lesdites coordonnées ; et générer le signal de guidage, lorsque ledit programme est exécuté par un module de traitement, notamment le module de traitement du terminal 3. Le programme fournit ainsi une mise en oeuvre logicielle du procédé, qui peut être exécutée sur une variété de dispositifs, notamment un smartphone, avec des mises à jour qui peuvent être simples.

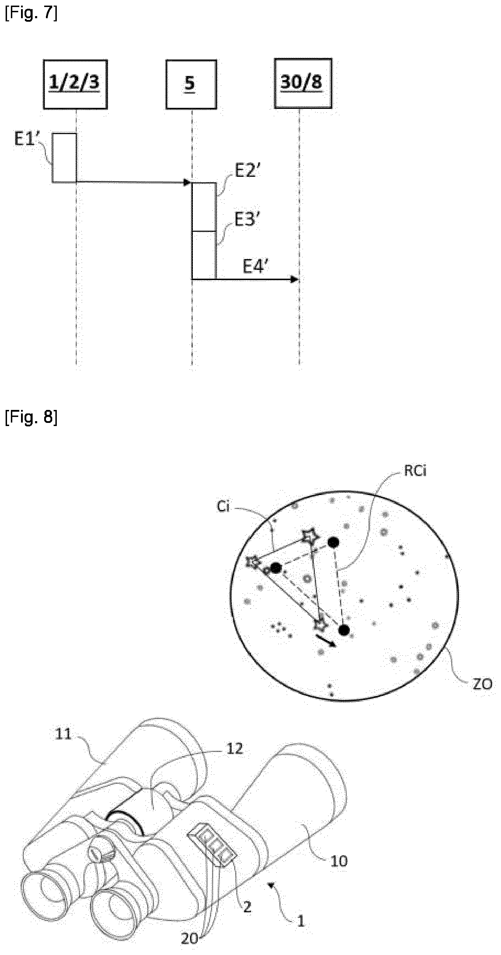

Une autre fonctionnalité permet non pas de guider l'observateur/utilisateur vers un objet d'intérêt, mais d'indiquer un ou plusieurs objets d'intérêt dans la zone céleste ZO qu'il est en train d'observer. Par exemple, l'observateur/utilisateur observe une zone céleste ZO, voit un objet, et veut l'identifier. Les différentes étapes permettant cette identification (figure 7) sont avantageusement les suivantes :

- Étape E1' : l'observateur/utilisateur sélectionne cette fonctionnalité, par exemple en actionnant un bouton dédié intégré dans la jumelle 1 ou sur le boîtier 2, ou accessible depuis le terminal 3.

- Étape E2' : le module de traitement 5 détermine les coordonnées célestes équatoriales de la zone d'observation en utilisant les mesures des capteurs 20 et les données du module de géolocalisation 4 (étape E5 précitée).

- Étape E3' : le module de traitement 5 sélectionne automatiquement dans la base de données le ou les objets célestes dont les coordonnées célestes équatoriales correspondent à celles mesurées.

- Étape E4' : le module de traitement 5 génère et/ou sélectionne des informations sur le ou les objets d'intérêt et commande leur affichage sur le moyen d'affichage 30, 8 précité.

Selon une fonctionnalité supplémentaire, le dispositif peut être utilisé de la même façon, mais pour la localisation de points de repère terrestres tels que des sommets de montagnes, des vallées, des villages, des rivières, des lacs, des forêts ou d'autres points de repère naturels ou artificiels observables avec des jumelles. Dans ce cas, les coordonnées géographiques (latitude, longitude et altitude) des points de repère terrestres sont utilisées. La base de données associe des points de repère terrestres de référence à leurs coordonnées géographiques. Le procédé peut être le suivant : l'observateur/utilisateur sélectionne un point de repère terrestre dans la base de données ; le module de traitement 5 détermine les coordonnées géographiques de l'observateur/utilisateur et de la zone d'observation terrestre en utilisant les mesures des capteurs 20 et les données du module de géolocalisation 4. Le module de comparaison 6 calcule une différence entre les coordonnées géographiques déterminées par le module de traitement 5 et les coordonnées géographiques du point de repère sélectionné ; le module de guidage 7 génère un signal de guidage dont au moins une caractéristique est fonction de la différence calculée par le module de comparaison 6. En connaissant les coordonnées géographiques de l'observateur/utilisateur et les coordonnées géographiques du point de repère, le module de traitement 5 peut notamment déduire et indiquer la direction dans laquelle doit être inclinée la jumelle (coordonnées alt/az) pour viser le point de repère sélectionné.

Les capteurs 20 et/ou le module de géolocalisation 4 peuvent être sujets à des imprécisions ou perturbations causées par divers facteurs, notamment des interférences électromagnétiques (proximité d'objets métalliques, champs magnétiques parasites), une mauvaise réception GPS, ou des erreurs intrinsèques de mesure. Ces perturbations peuvent compromettre la précision des coordonnées déterminées par le module de traitement 5, et ainsi altérer la correspondance entre la vision réelle de l'utilisateur et la précision du signal de guidage et/ou la précision des données affichées. Afin de garantir un guidage et un repérage céleste fiable et précis, il est avantageux d'intégrer une calibration préalable des capteurs 20 et/ou du module de géolocalisation 4.

Cette calibration peut être initiée manuellement par l'observateur/utilisateur, par exemple en actionnant un bouton dédié situé sur la jumelle 1, le boîtier 2, ou via l'interface du terminal 3. Cette calibration peut également être initiée automatiquement par le module de traitement 5, par exemple dès que ledit module détecte que la jumelle 1 reste orientée vers la zone d'observation ZO pendant une durée déterminée (ex : 5 s ou 10 s).

Une fois la calibration activée, le module de traitement 5 détermine les coordonnées célestes équatoriales de la zone d'observation ZO en s'appuyant sur les données fournies par les capteurs 20 et le module de géolocalisation 4.

Ensuite, le module de traitement 5 sélectionne dans la base de données, un ou plusieurs objets célestes préalablement enregistrés dont les coordonnées célestes équatoriales correspondent à celles de la zone d'observation ZO.

Le module de traitement 5 génère et/ou sélectionne une représentation numérique - ou image numérique - de cet objet céleste et commande son affichage sur le moyen d'affichage 8 intégré dans la jumelle 1.

Par exemple, comme illustré en figure 8, le module de traitement 5 identifie l'objet céleste Ci, dont les coordonnées équatoriales correspondent à celles de la zone d'observation céleste ZO. Il génère et/ou sélectionne une image numérique RCi de cet objet céleste Ci et l'affiche sur le moyen d'affichage 8. L'observateur/utilisateur perçoit ainsi simultanément à travers les oculaires : l'image réelle de l'objet céleste Ci et son image numérique RCi.

Toutefois, en raison des perturbations et/ou imprécisions potentielles des capteurs 20 et/ou du module de géolocalisation 4, il peut exister un décalage spatial entre l'image réelle de l'objet céleste Ci et son image numérique RCi. Ce décalage peut se traduire par une absence de superposition exacte, ou encore par des phénomènes d'instabilité (ex : tremblements ou décalages erratiques de l'image numérique).

Afin d'améliorer la stabilité de l'image numérique RCi et permettre un ajustement précis, le module de traitement 5 fixe ladite image numérique RCi de manière à ce qu'elle s'affiche de manière statique sur le moyen d'affichage 8. Cette fixation peut être réalisée automatiquement par le module de traitement 5 lorsqu'une instabilité est détectée, ou être initiée manuellement par l'observateur/utilisateur en actionnant un bouton dédié situé sur la jumelle 1 ou sur le boîtier 2 monté sur celle-ci. Quelle que soit la façon d'initier la fixation de l'image RCi, l'observateur/utilisateur peut maintenir ses yeux au niveau des oculaires, sans détourner son regard, et en maintenant la jumelle 1 orientée vers la zone d'observation céleste ZO.

Une fois l'image numérique RCi figée, l'observateur/utilisateur ajuste manuellement la jumelle 1 afin d'aligner l'image réelle de l'objet céleste Ci avec son image numérique fixe RCi. En d'autres termes, c'est l'image réelle qui est déplacée.

Dès que les deux images se superposent et/ou coïncident, l'observateur/utilisateur peut confirmer l'achèvement du processus de calibration en activant le bouton précité.

Cette validation permet au module de traitement 5 d'appliquer une correction des erreurs initiales de mesure, améliorant ainsi la précision globale des coordonnées pour les observations ultérieures.

Ce processus de calibration permet de corriger de manière fiable et robuste les erreurs initiales de mesure des capteurs 20 et/ou du module de géolocalisation 4. Grâce à la fixation statique de l'image numérique, cette calibration garantit une stabilité visuelle optimale, évitant tout tremblement ou décalage erratique. De plus, l'absence de recalculs incessants réduit également les erreurs de calibration, notamment celles dues aux perturbations ou aux mouvements intempestifs de la jumelle 1. Par ailleurs, l'alignement manuel et intuitif de l'image réelle et de l'image numérique fixe, permet d'améliorer l'expérience utilisateur, sans avoir à manipuler des réglages complexes.

Ce processus de calibration est techniquement indépendant de la génération du signal de guidage. Notamment, ce processus peut être mis en œuvre sans l'interface utilisateur 30, sans le module de comparaison 6, et sans le module de guidage 7. Il peut s'appliquer à de nombreux dispositifs d'observation, tels que jumelles, lunettes astronomiques, casques de réalité augmentée, etc.

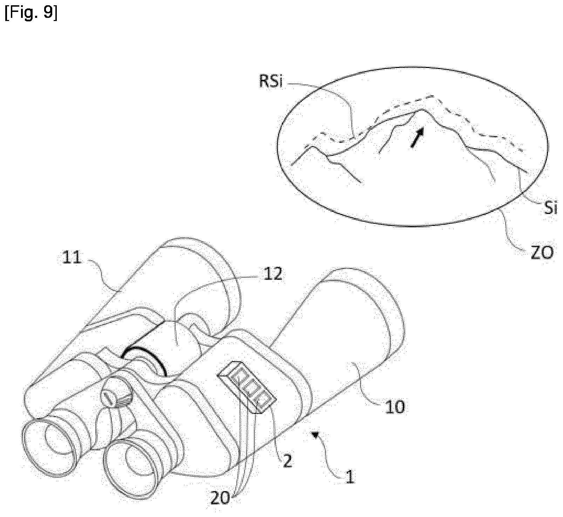

La figure 9 illustre un autre exemple d'application de ce processus de calibration à un dispositif est utilisé pour la localisation de points de repère terrestres. Après avoir déterminé les coordonnées géographiques de la zone d'observation ZO, le module de traitement 5 sélectionne dans la base de données, un ou plusieurs objets terrestres préalablement enregistrés et dont les coordonnées géographiques correspondent à celles de la zone d'observation ZO. Le module de traitement 5 sélectionne ici une ou plusieurs lignes de crête d'une montagne dont les coordonnées géographiques correspondent à celles de la zone ZO. Il génère et/ou sélectionne une image numérique RSi de cette ligne de crête et l'affiche sur le moyen d'affichage 8. L'observateur/utilisateur perçoit ainsi simultanément à travers les oculaires : l'image réelle Si de la montagne et l'image numérique RSi de sa ligne de crête. Une fois l'image numérique RSi figée, l'observateur/utilisateur ajuste physiquement la jumelle 1 afin d'aligner l'image réelle de l'objet terrestre Si avec ladite image numérique fixe. Dès que les deux images coïncident (alignement de la ligne de crête réelle avec la ligne de crête numérique), le processus de calibration est achevé.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation, même si ce ou ces caractéristiques sont décrites seulement en combinaison avec d'autres caractéristiques.

## Revendications

1. Dispositif d'assistance à la localisation d'objets célestes, comprenant :

    - une jumelle (1) comprenant un système optique et un moyen d'affichage (30, 8), ladite jumelle étant équipée d'au moins une combinaison de capteurs (20) configurée pour mesurer des coordonnées horizontales d'une zone d'observation céleste (ZO), laquelle combinaison de capteurs comprend : au moins un magnétomètre, un accéléromètre et un gyroscope ;
    - un module de géolocalisation (4) pour déterminer des données de position, de date et d'heure de l'observation ;
    - un module de traitement (5) pour déterminer des coordonnées célestes équatoriales de la zone d'observation céleste (ZO) en utilisant les mesures de la combinaison de capteurs (20) et les données du module de géolocalisation (4), ledit module de traitement étant configuré pour générer et/ou sélectionner des informations à afficher sur le moyen d'affichage (30, 8) ;
    - une base de données contenant des coordonnées célestes équatoriales d'objets célestes (C2-C6) sélectionnables ;
    - une interface utilisateur (30) pour sélectionner un objet céleste (C2) dans la base de données ;
    - un module de comparaison (6) pour calculer une différence entre les coordonnées célestes équatoriales déterminées par le module de traitement (5) et les coordonnées célestes de l'objet céleste sélectionné (C2) ;
    - un module de guidage (7) pour générer un signal de guidage dont au moins une caractéristique est fonction de la différence calculée par le module de comparaison (6).

2. Dispositif selon la revendication 1, dans lequel la combinaison de capteurs (20) comprend au moins deux magnétomètres.

3. Dispositif selon l'une des revendications précédentes, dans lequel la jumelle (1) est équipée de plusieurs combinaisons de capteurs (20).

4. Dispositif selon la revendication 2, dans lequel les mesures de la combinaison de capteurs (20) utilisée pour déterminer les coordonnées célestes équatoriales de la zone d'observation céleste (ZO) comprennent la moyenne ou la médiane des mesures des magnétomètres.

5. Dispositif selon la revendication 3, dans lequel les mesures des combinaisons de capteurs (20) utilisées pour déterminer les coordonnées célestes équatoriales de la zone d'observation céleste (ZO) comprennent la moyenne ou la médiane des mesures des magnétomètres.

6. Dispositif selon l'une des revendications précédentes, comprenant au moins l'une des caractéristiques suivantes :

    - le module de traitement (5) est configuré pour prendre la moyenne ou la médiane des mesures en temps réel de la combinaison de capteurs (20) pour déterminer les coordonnées célestes équatoriales de la zone d'observation céleste (ZO),
    - le module de traitement (5) est configuré pour :

        a) recevoir des mesures du magnétomètre ;
        b) accéder à un modèle magnétique mondial (MMM) représentant le champ magnétique terrestre ;
        c) appliquer des corrections aux mesures du magnétomètre sur la base des informations obtenues à partir du MMM pour calculer des mesures corrigées ;
        d) utiliser les mesures corrigées pour déterminer les coordonnées célestes équatoriales de la zone d'observation céleste (ZO).

7. Dispositif selon l'une des revendications précédentes, dans lequel le moyen d'affichage (8) est installé de manière à afficher les informations dans un plan image (Pi) du système optique de la jumelle (1).

8. Dispositif selon la revendication 7, dans lequel le moyen d'affichage (8) est :

    - un écran installé dans le plan image (Pi) de manière à n'obstruer qu'en partie l'image de la zone d'observation céleste (ZO) observée à travers un oculaire (101) du système optique, ou

- un écran semi-réfléchissant installé dans le plan image (Pi) de manière à ce que les informations affichées se superposent à l'image de la zone d'observation céleste (ZO) observée à travers un oculaire (101) du système optique, ou,

- se présente sous la forme d'un écran projetant une image numérique des informations en direction d'une lame semi-réfléchissante (80), laquelle lame est agencée dans le système optique de manière à ce que ladite image numérique se superpose à l'image de la zone d'observation céleste (ZO) observée à travers un oculaire (101) dudit système optique.

**9.** Dispositif selon l'une des revendications précédentes, comprenant au moins l'une des caractéristiques suivantes :

- le module de guidage (7) est configuré pour générer le signal de guidage si la différence calculée est inférieure ou égale à une première valeur seuil prédéterminée,

- le module de guidage (7) est configuré pour cesser la génération du signal de guidage lorsque la différence calculée par le module de comparaison (6) demeure inférieure ou égale à une deuxième valeur seuil prédéterminée pendant une durée prédéterminée,

- le module de guidage (7) est configuré pour générer un signal sonore et/ou un signal visuel et/ou un signal vibratoire dont au moins une caractéristique est amplifiée lorsque diminue la différence calculée par le module de comparaison (6).

**10.** Dispositif selon l'une des revendications précédentes, dans lequel :

- le module de géolocalisation (4), le module de traitement (5), le module de comparaison (6) et le module de guidage (7) sont intégrés dans un téléphone intelligent ou une tablette (3), ou

- les capteurs (20), le module de géolocalisation (4), le module de traitement (5), le module de comparaison (6) et le module de guidage (7) sont intégrés dans la jumelle (1), ou

- les capteurs (20), le module de traitement (5), le module de comparaison (6) et le module de guidage (7) sont intégrés dans la jumelle (1) et le module de géolocalisation (4) est intégré dans un téléphone intelligent ou une tablette (3), ou

- les capteurs (20) sont logés dans un boîtier (2) conçu pour être monté sur la jumelle (1).

**11.** Procédé d'assistance à la localisation d'objets célestes, comprenant les étapes suivantes :

- a) équiper une jumelle (1) comprenant un système optique et un moyen d'affichage (30, 8), avec au moins une combinaison de capteurs (20) configurée pour mesurer des coordonnées horizontales d'une zone d'observation céleste (ZO), laquelle combinaison de capteurs comprend : au moins un magnétomètre, un accéléromètre et un gyroscope ;

- b) déterminer des données de position, de date et d'heure de l'observation ;

- c) déterminer des coordonnées célestes équatoriales de la zone d'observation céleste (ZO) en utilisant les mesures de la combinaison de capteurs et les données déterminées à l'étape b) ;

- d) sélectionner un objet céleste (C2) dans une base de données contenant des objets célestes (C2-C6) sélectionnables associés à des coordonnées célestes équatoriales ;

- e) calculer une différence entre les coordonnées célestes équatoriales déterminées à l'étape c) et les coordonnées célestes de l'objet céleste sélectionné (C2) ;

- f) générer un signal de guidage dont au moins une caractéristique est fonction de la différence calculée à l'étape e),

- ledit procédé comprenant en outre une étape consistant à générer et/ou sélectionner des informations à afficher sur le moyen d'affichage (30, 8).

**12.** Procédé selon la revendication 11, dans lequel :

- l'étape a) consiste à équiper la jumelle de plusieurs combinaisons de capteurs et/ou d'une combinaison de capteurs comprenant au moins deux magnétomètres,

- l'étape c) est réalisée en utilisant la moyenne ou la médiane des mesures des magnétomètres des plusieurs combinaisons de capteurs et/ou de la combinaison de capteurs comprenant au moins deux magnétomètres.

**13.** Procédé selon l'une des revendications 11 ou 12, comprenant en outre les étapes suivantes :

- sélectionner automatiquement dans la base de données, un plusieurs objets célestes dont les coordonnées célestes équatoriales correspondent à celles déterminées à l'étape c),

- générer et/ou sélectionner des informations sur ledit ou lesdits objets célestes sélectionnés,

- afficher lesdites informations sur le moyen d'affichage (30, 8).

**14.** Procédé selon l'une des revendications 11 à 13, comprenant en outre les étapes suivantes :

- c') déterminer des coordonnées géographiques d'une zone terrestre en utilisant les mesures de la combinaison de capteurs et les données déterminées à l'étape b) ;

- d') sélectionner un point de repère terrestre dans une base de données contenant des points de repère terrestres sélectionnables associés à des coordonnées géographiques ;

- e') calculer une différence entre les coordonnées géographiques déterminées à l'étape c') et les coordonnées géographiques du point de repère terrestre sélectionné ;

- f') générer un signal de guidage dont au moins une caractéristique est fonction de la différence calculée à l'étape e').

**15.** Procédé selon l'une des revendications 11 à 14, comprenant en outre les étapes de calibration suivantes :

- sélectionner un objet céleste (Ci) dans une base de données contenant des objets célestes associés à des coordonnées célestes équatoriales, ledit objet sélectionné présentant des coordonnées célestes équatoriales correspondant aux coordonnées célestes équatoriales de la zone d'observation céleste (ZO) déterminées à l'étape c) ;

- afficher, sur le moyen d'affichage (8), une image numérique (RCi) représentant l'objet céleste (Ci) sélectionné, de manière à ce que ladite image numérique soit perçue à travers un oculaire de ladite jumelle ;

- fixer l'image numérique (RCi) de manière à ce que ladite image s'affiche de manière statique sur le moyen d'affichage (8) ;

- ajuster manuellement la jumelle (1) pour aligner l'image réelle de l'objet céleste (Ci) perçue à travers l'oculaire de ladite jumelle et l'image numérique (RCi) ;

- finaliser la calibration dès que les deux images sont superposées et/ou coïncident.

[Fig. 1]

[Fig. 2A]

[Fig. 2B]

[Fig.3]

[Fig.4A]

[Fig. 4B]

[Fig. 5]

[Fig. 6]

[Fig. 7]

[Fig. 8]

[Fig. 9]

Europäisches
Patentamt

European
Patent Office

Office européen
des brevets

**RAPPORT DE RECHERCHE EUROPEENNE**

Numéro de la demande

EP 25 16 5783

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | IT 2021 0001 3925 A1 (GEOPTIK DI BONAFINI EZIO [IT]) 27 novembre 2022 (2022-11-27) * page 6, lignes 19-23 * * page 8, lignes 5-10 * * page 15, ligne 21 - page 16, ligne 1 * ----- | 1-3,9 | INV. G02B23/14 G02B23/16 G02B23/18 |
| A | US 2019/196173 A1 (MALVACHE ARNAUD [FR] ET AL) 27 juin 2019 (2019-06-27) * alinéa [0077]; figure 1 * ----- | 1-15 | |
| A,D | US 2016/124210 A1 (ROSS PAUL HOWARD [US] ET AL) 5 mai 2016 (2016-05-05) * le document en entier * ----- | 1-15 | |
| A | WO 2023/186350 A1 (SPHERON VR AG [DE]) 5 octobre 2023 (2023-10-05) * page 9, dernier alinéa - page 10, alinéa 1 * ----- | 1-15 | |

DOMAINES TECHNIQUES RECHERCHES (IPC)

G02B

Le présent rapport a été établi pour toutes les revendications

| Lieu de la recherche | Date d'achèvement de la recherche | Examinateur |
|---|---|---|
| Munich | 2 juin 2025 | Mollenhauer, Ralf |

EPO FORM 1503 03.82 (P04C02)

# EP 4 625 022 A1

## ANNEXE AU RAPPORT DE RECHERCHE EUROPEENNE
## RELATIF A LA DEMANDE DE BREVET EUROPEEN NO.

EP 25 16 5783

02-06-2025

| Document brevet cité au rapport de recherche | Date de publication | Membre(s) de la famille de brevet(s) | Date de publication |
|---|---|---|---|
| IT 202100013925 A1 | 27-11-2022 | ------------------------------------ | |
| US 2019196173 A1 | 27-06-2019 | EP 3494430 A1 | 12-06-2019 |
| | | FR 3054897 A1 | 09-02-2018 |
| | | US 2019196173 A1 | 27-06-2019 |
| | | US 2021405341 A1 | 30-12-2021 |
| | | US 2021405342 A1 | 30-12-2021 |
| | | US 2023185073 A1 | 15-06-2023 |
| | | WO 2018025001 A1 | 08-02-2018 |
| US 2016124210 A1 | 05-05-2016 | AUCUN | |
| WO 2023186350 A1 | 05-10-2023 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3494430 A1
- US 2016124210 A

- IT 202100013925